# EUROPÄISCHE PATENTSCHRIFT

(11) **EP 1 378 739 B1**
(45) Veröffentlichungstag und Bekanntmachung des Hinweises auf die Patenterteilung: **12.08.2009**
(21) Anmeldenummer: 03013636.0
(22) Anmeldetag: 16.06.2003
(51) Int. Cl.: G01M 1/32

(54) **Vorrichtung zum Einsetzen eines Unwuchtausgleichgewichts am Felgenhorn eines Kraftfahrzeugrades**
Device for inserting a balancing weight at the rim flange of a motor vehicle wheel
Dispositif d'insertion d'un poids d'équilibrage à la collerette de jante d'une roue de véhicule à moteur

(30) Priorität: 02.07.2002 DE 10229646
(43) Veröffentlichungstag der Anmeldung: 07.01.2004
(73) Patentinhaber: Hofmann Maschinen- und Anlagenbau GmbH, 67550 Worms (DE)
(72) Erfinder: Metzger, Jochen, 67133 Maxdorf (DE)
(74) Vertreter: Nöth, Heinz

(56) Entgegenhaltungen:
- EP-A- 0 519 162
- EP-A- 0 767 365
- DE-A1- 4 432 455
- DE-B- 1 084 494
- GB-A- 1 259 481
- US-A- 4 554 734
- US-A- 5 557 043
- US-A- 5 587 528

## Beschreibung

Die Erfindung betrifft eine Vorrichtung zum Einsetzen eines Unwuchtausgleichgewichts in ein Felgenhorn eines Kraftfahrzeugrades nach dem Oberbegriff des Patentanspruches 1, wie aus DE-AS 1 084 494 bekannt.

Das in einer Unwuchtausgleichsposition am Felgenhorn eines Kraftfahrzeugrades einzusetzende Unwuchtausgleichsgewicht besteht aus dem Ausgleichsgewicht und einer getrennten Haltefeder. Zum Befestigen des Ausgleichsgewichts wird bei der bekannten Vorrichtung das in die Ausgleichsposition gebrachte Ausgleichsgewicht mittels eines Gewichtehalters festgehalten und mittels eines linear bewegten Federhalters wird die Haltefeder über das Ausgleichsgewicht und das Felgenhorn geschoben. An einer zangenförmigen Halteeinrichtung sind in Form von Rollen Reifenabdrücker angeordnet, welche an beiden Seiten des Kraftfahrzeugrades zum erleichterten Einsetzen der Haltefeder den Reifen durch eine achsparallele Druckbe-wegung vom Felgenhorn wegdrücken. An einem gemeinsamen Halter sind Lager zur linearen Führung des Federhalters und ein Gewichtehalter vorgesehen, welcher mit Federspannung gegen einen Anschlag an dem gemeinsamen Halter angedrückt ist. Der Gewichtehalter ist schwenkbar am gemeinsamen Halter gelagert. Zwischen dem Gewichtehalter und dem Federhalter ist eine Kompensationseinrichtung in Form einer Feder vorgesehen, welche unterschiedliche Bewegungen des Gewichtehalters und des Federhalters ausgleicht.

Die Druckschrift EP-A-0 519 162 offenbart eine Vorrichtung zum Montieren von Ausgleichgewichten an ein Fahrzeugrad, wobei an einem Manipulator oder einem Roboterarm eine Gewichthalteeinrichtung und ein Hammerkopf angeordnet sind. Mittels der Gewichthalteeinrichtung werden die nach Erfassung einer Unwucht des Fahrzeugrads erforderlichen Gewichte bzgl. ihres Werks bestimmt und der Gewichthalteeinrichtung zugeführt. Die Gewichte bestehen im Einzelnen aus einem Gewichtsteil und einem Bügelteil. Nach dem Ansetzen des Ausgleichsgewichts an die erforderliche Position an der Felge des Fahrzeugrads wird durch den Hammerkopf der Bügelteil des Ausgleichsgewichts entsprechend bearbeitet und in Eingriff mit einem Felgenhorn der Felge gebracht. Auf diese Weise wird das Ausgleichsgewichts an der zuvor bestimmten Stelle befestigt.

Die Druckschrift US-A-5 557 043 offenbart eine Vorrichtung zum Anbringen eines Ausgleichsgewichts mit einer darauf angeordneten Klebeschicht an ein Fahrzeugrad entsprechend einer Ausgleichsposition. Die Vorrichtung umfasst eine Halteeinrichtung mit zumindest einem ersten und zweiten Halteteil zum Halten des Ausgleichsgewichts mit einer Federkraft, wobei die Halteeinrichtung zu der Ausgleichsposition an dem Fahrzeugrad geführt wird. Nach dem Erreichen der gewünschten Ausgleichsposition wird in Richtung dieser Ausgleichsposition eine Druckkraft auf das Ausgleichsgewicht ausgeübt, so dass dieses in Verbindung mit der daran angeordneten Klebeschicht an dem Fahrzeugrad festgehalten wird und sich von der Halteeinrichtung lösen kann. Insbesondere wird die gesamte Klebeschicht an die Radoberfläche angedrückt.

Die Druckschrift EP 0 767 365 A1 offenbart eine Auswuchteinrichtung zum Anordnen von Auswuchtgewichten an den Felgen von Fahrzeugrädern, wobei eine in Drehachsenrichtung des Fahrzeugrads verschiebbar angeordnete Vorrichtung vorgesehen ist, die das Ausgleichsgewicht trägt, und diese Vorrichtung mittels einer verschwenkbaren Einrichtung in Richtung der Felgenseite des Fahrzeugs senkrecht zur Drehachse des Fahrzeugrads geschwenkt wir, um auf diese Weise das Ausgleichsgewicht an der für einen Massenausgleich erforderlichen zuvor bestimmten Stelle anzuordnen.

Aus DE 44 32 455 A1 ist zum Heranführen eines Ausgleichsgewichtes an die Ausgleichsstelle ein Gewichtehalter bekannt, der eine Blattfeder aufweist, durch welche beim Andrücken an die Ausgleichsstelle eine Anpassung an die Neigung der Fläche der Ausgleichsstelle erreicht wird.

Aus der DE 33 16 945 C2 ist es beim Einsetzen eines Ausgleichsgewichts und Befestigen des Ausgleichsgewichts mit separater Haltefeder am Felgenhorn bekannt, die Ausgleichsfeder linear beim Aufschieben zu führen und einen Gewichtehalter an einer Übernahmeeinrichtung zur Entnahme der Ausgleichsgewichte aus einem Magazin und zur Positionierung in der Unwuchtausgleichsposition schwenkbar zu lagern.

Die Befestigung des Ausgleichsgewichts durch die aufgeschobene Feder kann nur dann gewährleistet sein, wenn das Ausgleichsgewichts sowohl am axialen als auch am radialen Teil des Felgenhorn anliegt. Diese geeignete Positionierung in der Ausgleichswinkellage bereitet aufgrund unterschiedlicher Felgenhorngestaltungen im Mixbetrieb beim Auswuchten unterschiedlicher Radtypen erhebliche Schwierigkeiten. Die gesteuerte Federpositionierung und die axiale Zuführung und endgültige Positionierung des Ausgleichsgewichtes in der Ausgleichsposition erfordern für jeden Vorgang separate Steuerungs- und Führungseinrichtungen, wobei bei unterschiedlichen Radtypen die elektronisch gesteuerten Bewegungen von der Software erst gelernt werden müssen.

Aufgabe der Erfindung ist es, eine Vorrichtung der eingangs genannten Art zu schaffen, mit welchen ein einwandfreies Einsetzen des Unwuchtausgleichsgewichts auch bei unterschiedlichen aufeinanderfolgenden Radtypen und somit unterschiedlichen Felgenhornformen erreicht wird.

Diese Aufgabe wird erfindungsgemäß durch die kennzeichnenden Merkmale des Patentanspruches 1 gelöst.

Die Unteransprüche kennzeichnen vorteilhafte Weiterbildungen der Erfindung.

Bei der Erfindung sind die beiden Bewegungen für die Positionierung des Ausgleichsgewichts und für das Aufschieben der Haltefeder auf das in der Ausgleichsposition gehaltene Ausgleichsgewicht kinematisch dadurch gekoppelt, dass sie aus einer einzigen Betätigungsbewegung abgeleitet und über zugeordnete Steuerflächen auf den Gewichtehalter und den Federhalter übertragen werden. Es erfolgt somit die Bewegung des Gewichtehalters und des Federhalters koordiniert. Unterschiedliche Wegstrecken beim Positionieren des Ausgleichsgewichts am axialen und radialen Teil des Felgenhorns in der Ausgleichswinkellage und der Schubbewegung der Haltefeder werden durch eine federnde Wegkompensation, die in geeigneter Weise als Feder insbesondere Blattfeder ausgebildet ist, ausgeglichen.

Vorzugsweise erfolgt die Wegkompensation kinematisch zwischen der einzigen Betätigungsbewegung und der endgültigen Positionierung des Ausgleichsgewichts an den axial und radial sich erstreckenden Teilen des Felgenhorns. Die hierzu vorgesehene Kompensationseinrichtung, z.B. Blattfeder dient auch zur Bewegungsübertragung. Vorzugsweise wird das Ausgleichsgewicht durch eine Schwenkbewegung in die endgültige Positionierung an der Ausgleichsposition des Felgenhorns gebracht. In bekannter Weise wird die Haltefeder durch eine lineare Schubbewegung, welche aus der einzigen Betätigungsbewegung abgeleitet ist, auf das in der endgültigen Ausgleichsposition gehaltene Ausgleichsgewicht geschoben.

Die kinematische Kopplung und Koordinierung der unterschiedlichen Bewegungen des Federhalters und des Gewichtehalters wird dadurch erleichtert, dass der Federhalter, der Gewichtehalter und die für ihre Bewegungssteuerung vorgesehene Betätigungseinrichtung in Lagern beweglich geführt sind, welche an einem gemeinsamen Halter vorgesehen sind.

Die drehbar gelagerte Betätigungseinrichtung weist zur Übertragung der beiden gesteuerten separaten Bewegungen auf den Federhalter und den Gewichtehalter zwei Steuerflächen auf, von denen die eine Steuerfläche dem Gewichtehalter und die andere Steuerfläche dem Federhalter zugeordnet sind. Auch das Lager des Gewichtehalters ist vorzugsweise als Drehlager ausgebildet. Der Federhalter ist in einem Lager linear verschiebbar geführt, wie es beispielsweise D-AS 1084494 oder DE 33 16 945 C2 bekannt ist.

Die Steuerflächen der Betätigungseinrichtung können zur Erzeugung der unterschiedlichen Bewegungen für den Federhalter und für den Gewichtehalter an der Betätigungseinrichtung exzentrisch bezüglich deren Drehlager angeordnet sein.

Um ein einwandfreies Aufschieben der Haltefeder auf das in der Unwuchtausgleichsposition befindliche Ausgleichsgewicht und das Felgenhorn zu gewährleisten, wird der Reifen vom Felgenhorn in axialer Richtung mit Hilfe eines Reifenabdrückers abgedrückt. Dabei wird der Druck auf den Reifen in einem vorgegebenen radialen Abstand zum Felgenhorn ausgeübt. Dies wird durch eine Vorpositioniereinrichtung gewährleistet, welche einen konstanten Abstand zum Reifenabdrücker aufweist, wobei die Vorpositioniereinrichtung an das Felgenhorn anlegbar ist. Hierdurch wird eine Vorpositionierung des Reifenabdrückers in Abhängigkeit von der Lage des Felgenhorns erreicht. Durch diese bezüglich des Felgenhorns fest vorgegebene Positionierung des Reifenabdrückes ist gewährleistet, dass der Luftreifen weit genug vom Felgenhorn abgedrückt wird, so dass die Feder sicher über dem Ausgleichsgewicht und dem Felgenhorn positioniert wird und in das Gewicht einrastet. Hierdurch wird eine stabile Verbindung zwischen dem Felgenhorn und dem Ausgleichsgewicht erreicht, wobei diese Verbindung, beispielsweise durch Aufspreizen der Feder wieder gelöst werden kann.

Auch das Gewichteeinsetzwerkzeug, welches den Federhalter und den Gewichtehalter enthält, wird vorzugsweise durch die Vorpositioniereinrichtung in Abhängigkeit von der Lage des Felgenhorns vorpositioniert. Hierdurch wird gewährleistet, dass das Gewicht in radialer Richtung in die Ausgleichsdrehwinkellage in die unmittelbare Nähe des Felgenhorns gebracht werden kann, so dass anschließend durch die Schwenkbewegung des Gewichtehalters das Ausgleichsgewicht an den axialen und radialen Teilen des Felgenhorns anliegend in seine endgültige Ausgleichsposition gebracht wird. Auch die Vorschubrichtung des Federhalters ist durch diese Vorpositionierung in die richtige Lage für das Aufschieben der Feder auf das Gewicht und das Felgenhorn gebracht.

### [Beispiele]

Anhand der Figuren wird an einem Ausführungsbeispiel die Erfindung noch näher erläutert.

Es zeigt
- Fig. 1: die wesentlichen Konstruktionsteile eines Ausführungsbeispiels in Zusammenbau; und
- Fig. 2: schematisch die kinematische Kette, mit welcher der Federhalter und der Gewichtehalter von der gemeinsamen Betätigungseinrichtung beim Gewichteeinsetzen gesteuert werden.

Beim dargestellten Ausführungsbeispiel einer Gewichteeinsetzvorrichtung sind an einem gemeinsamen Halter 15 ein Federhalter 4 und ein Gewichtehalter 13 beweglich gelagert. Der Federhalter 4 ist linear in einer Lagerhülse 22 beweglich gelagert. Die Lagerhülse 22 ist am gemeinsamen Halter 15 befestigt. Zur linearen Führung des Federhalters 4 ist dieser am vorderen Ende einer Führungsstange 23 befestigt. Die Führungsstange 23 ist in der Lagerhülse 22 verschiebbar gelagert. Im Federhalter 3 wird eine Haltefeder 3 gehalten.

Die Führungsstange 23 mit dem Federhalter 4 sind in Richtung auf eine Steuerfläche 17, welche an einem Steuerhebel 6 einer Betätigungseinrichtung 14 vorgesehen ist, mittels einer an der Lagerhülse 22 abgestützten Vorspannfeder 25 vorgespannt. Hierzu ist am Ende der Führungsstange 23 eine Abtastrolle 7 vorgesehen, welche auf die Steuerfläche 17 aufgedrückt wird.

Ferner ist am gemeinsamen Halter 15 ein Gewichtehalter 13 gelagert. Der Gewichtehalter 13 befindet sich am vorderen Ende eines schwenkbaren Armes 10. Der schwenkbare Arm 10 ist in einem als Drehlager ausgebildeten Lager 11 am gemeinsamen Halter 15 gelagert. Am hinteren Ende des schwenkbaren Armes 10 ist eine Kompensationseinrichtung 12 in Form einer Blattfeder befestigt. Ein Abtastende 26 der Kompensationseinrichtung ist auf eine Steuerfläche 16 der Betätigungseinrichtung 14 mit Federvorspannung aufgedrückt. Die Steuerfläche 16 befindet sich an einem Steuernocken 21 der Betätigungseinrichtung 14. Der Steuernocken 21 und der Steuerhebel 6 sind starr miteinander verbunden und können aus einem Stück gebildet sein. Der Steuernocken 21 und der Steuerhebel 6 sind gemeinsam in einem Lager (Drehlager) schwenkbar am Halter 15 gelagert. Mit dem Steuerhebel und dem Steuernocken 21 ist ein Betätigungshebel 24 der Betätigungseinrichtung 14 starr verbunden. Der Betätigungshebel 24 kann von Hand oder automatisch durch einen näher dargestellten Betätigungsmechanismus um das Lager 8 geschwenkt werden.

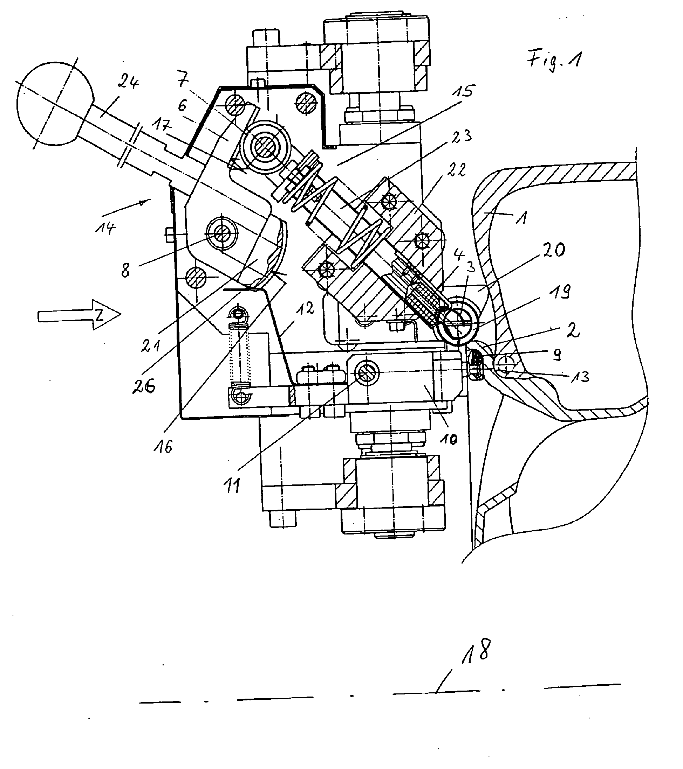

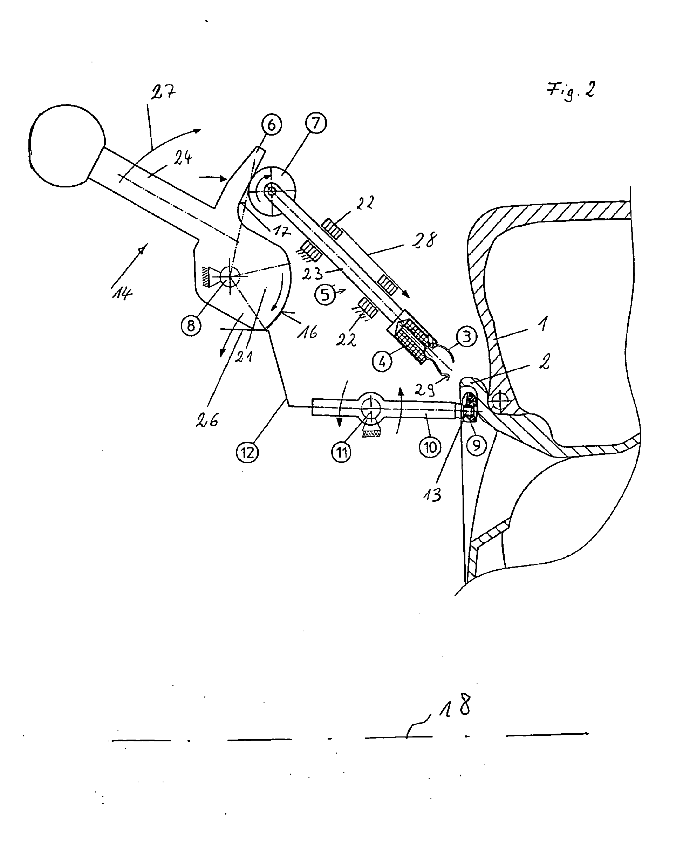

Zwei Einsetzvorrichtungen, wie sie in Fig. 1 dargestellt sind, können in axialer Richtung an beide Seiten eines Kraftfahrzeugrades herangeführt werden. Die Bewegungsrichtung für die linke Radseite ist in Fig. 1 mit einem Pfeil Z bezeichnet. In entgegengesetzter Richtung wird an die rechte Radseite die andere Einsetzvorrichtung herangeführt. Dabei wird ein am Gewichtehalter 13 befestigtes Ausgleichsgewicht 9 in den Bereich eines Felgenhorns 2 des Kraftfahrzeugrades herangeführt. Dabei kann das Ausgleichsgewicht 9 mit dem radial verlaufenden Teil des Felgenhorns 2 in Berührung kommen, wie es in Fig. 2 dargestellt ist.

Die beiden Einsetzvorrichtungen können hierzu an den beiden Enden einer Schere ähnlich wie in der D-AS 1084495 angeordnet sein. Die Schere, die nicht näher dargestellt ist, kann an einem Schwebebalken gelagert sein und von einer Bedienungsperson oder automatisch in die gewünschte Position gebracht werden. Es ist auch möglich, mittels zweier Schlittenführungen die beiden Einsetzvorrichtungen, welche in zwei Freiheitsgraden beweglich ist, zu positionieren.

In einem ersten Schritt wird die Einsetzvorrichtung am Kraftfahrzeugrad so positioniert, dass eine Vorpositioniereinrichtung 19 in Form einer Rolle am Felgenhorn 2 anliegt. Hierdurch wird der gemeinsame Halter 15 und damit die Einsetzwerkzeuge in Form des Gewichtehalters 13 mit dem daran befestigten Ausgleichsgewicht und der Federhalter 4 mit der daran befestigten Feder 3 am Rad in der gewünschten Lage positioniert.

Gleichzeitig wird ein Reifenabdrücker 20, der einen konstanten radialen Abstand zur Vorpositioniereinrichtung 19 aufweist, in eine solche Position gebracht, dass bei einer zur Radachse achsparallelen Bewegung ein Teil des Luftreifens 1 vom Felgenhorn 2 so weit abgedrückt wird, dass die Haltefeder 3 einwandfrei über das in seiner endgültigen Position befindliche Ausgleichsgewicht 9, welche in Fig. 1 dargestellt ist, und das Felgenhorn 2 geschoben werden kann. Die Feder 3 wird dabei so weit vorgeschoben, dass sie in einer entsprechenden Ausnehmung des Ausgleichsgewichts 9 in bekannter Weise einrastet.

Durch die in Fig. 1 dargestellte Anordnung des Reifenabdrückers 2 und der in Form einer Rolle vorliegenden Vorpositioniereinrichtung 19 ist gewährleistet, dass der Reifenabdrücker 20 zum Felgenhorn 2 und damit zum Reifenwulst den gewünschten Abstand aufweist. Hierdurch ist sichergestellt, dass der für das Aufschieben der Haltefeder 3 erforderliche Freiraum zwischen der Innenseite des Felgenhorns 2 und dem abgedrückten Luftreifen 1 erreicht wird. Die Abdrückbewegung des Reifenabdrückers kann mit Hilfe eines nicht näher dargestellten Einrichtung, beispielsweise Zylinders, der den Reifenabdrücker 20 achsparallel bewegt, erfolgen.

Um das Ausgleichsgewicht 9 in seine endgültige in der Fig. 1 dargestellte Position zu bringen und ferner die Haltefeder 3 über das so gehaltene Ausgleichsgewicht 9 und das Felgenhorn 2 zu schieben, wird der Betätigungshebel 24 in Richtung eines Pfeiles 27 (Betätigungsrichtung) um das Lager 8 geschwenkt. Dabei werden der Steuernocken 16 mit der ersten Steuerfläche 16 und der Steuerhebel 6 mit der zweiten Steuerfläche 17 in Fig. 2 in der Betätigungsrichtung 27 um das Lager 8 (im Uhrzeigersinn in Fig. 2) geschwenkt. Dabei wird die Kontur der Steuerfläche 16 auf das Abtastende 26 des schwenkbaren Armes 10 übertragen, so dass dieser um das Lager 11 entgegen dem Uhrzeigersinn verschwenkt wird und das am Gewichtehalter 13 befestigte Ausgleichsgewicht 9 in die in der Fig. 1 dargestellte Position gebracht wird. Dabei liegt das Ausgleichsgewicht 9 sowohl am radialen Teil als auch am axialen Teil des Felgenhorns an, wie die Fig. 1 zeigt. Durch die Verschwenkung des Betätigungshebels 24 in die Betätigungsrichtung 27 wird gleichzeitig der Steuerhebel 6 um das Lager 8 geschwenkt, so dass die Kontur der Steuerfläche 17 auf die Abtastrolle 7 übertragen wird. Dabei wird die Führungsstange 23 in der Lagerhülse 23 in Richtung zum Felgenhorn 2 geschoben (Schubrichtung 28). Die Haltefeder 3 wird so weit auf das Ausgleichsgewicht 9 und das Felgenhorn 2 aufgeschoben, bis ein Rastelement 29 an der Haltefeder 3 in ein entsprechendes Rastelement am Ausgleichsgewicht 9 einrastet.

Durch die am hinteren Ende des schwenkbaren Armes 10 befestigte Kompensationseinrichtung 12, welche vorzugsweise als Biegefeder, insbesondere Blattfeder ausgebildet ist, erreicht man einen Wegausgleich zwischen den beiden unterschiedlichen Bewegungsarten und Bewegungsstrecken des Gewichtehalters 13 und des Federhalters 4. Bei Fortschreiten der Drehung des Steuerhebels 6 um das Lager (Drehlager 8) wird die Haltefeder 3, wie schon erläutert, auf das Ausgleichsgewicht 9 und das Felgenhorn aufgeschoben, wobei das Ausgleichsgewicht 9 sich bereits in seiner endgültigen in der Fig. 1 dargestellten Position befindet. Aufgrund der Kompensationseinrichtung 12 kann die Schubbewegung (Schubrichtung 28) der Haltefeder 3 auch dann fortgesetzt werden, wenn sich das Ausgleichsgewicht 9 in der in der Fig. 1 dargestellten endgültigen Position befindet. Hierbei wird vorzugsweise die aus der Weiterbewegung zwischen der Steuerfläche 16 und der federnd ausgebildeten Kompensationseinrichtung 12 erzeugte Reaktionskraft in eine Erhöhung der Anpresskraft, mit welcher das Ausgleichsgewicht 9 an das Felgenhorn 2 angepresst wird, umgesetzt. Hierdurch wird ein Blockieren der kinematischen Kette, mit welcher die beiden unterschiedlichen Bewegungen erzeugt werden, durch Wegkompensation verhindert und außerdem eine exakte Positionierung des Ausgleichsgewichts 9 während des Aufschiebens der Haltefeder 3 gewährleistet. Beim dargestellten Ausführungsbeispiel dient die Kompensationseinrichtung 12 auch zur Übertragung der Bewegung von der Steuerfläche 16 auf den Gewichtehalter 13.

Mit der beschriebenen Vorrichtung können Gewichte mit separaten Haltefedern an unterschiedlichen Felgenhorngeometrien exakt und ohne Steuerungs- und Vorrichtungsaufwand eingesetzt werden. Dies wird durch die beschriebene Kompensationskinematik für das Positionieren des Ausgleichsgewichtes 9 und das Einsetzen der Haltefeder 3 gewährleistet.

### [Bezugszeichenliste]

- 1: Luftreifen
- 2: Felgenhorn
- 3: Haltefeder
- 4: Federhalter
- 5: Lager (Linearführung)
- 6: Hebel
- 7: Abtastrolle
- 8: Lager (Drehlager)
- 9: Ausgleichsgewicht
- 10: schwenkbarer Arm
- 11: Lager (Drehlager)
- 12: Kompensationseinrichtung
- 13: Gewichtehalter
- 14: Betätigungseinrichtung
- 15: gemeinsamer Halter
- 16: erste Steuerfläche
- 17: zweite Steuerfläche
- 18: Radachse
- 19: Vorpositioniereinrichtung (Rolle)
- 20: Reifenabdrücker
- 21: Steuernocken
- 22: Lagerhülse
- 23: Führungsstange
- 24: Betätigungshebel
- 25: Vorspannfeder
- 26: Abtastende
- 27: Betätigungsrichtung
- 28: Schubrichtung
- 29: Rastelement

## Patentansprüche

1. Vorrichtung zum Einsetzen eines Unwuchtausgleichgewichts in ein Felgenhorn eines Kraftfahrzeugrades, wobei das Ausgleichsgewicht mittels einer separaten Haltefeder am Felgenhorn befestigt wird, mit einem Gewichtehalter, welcher mit einer Positionierbewegung das Ausgleichsgewicht in die für den Unwuchtausgleich bestimmte Ausgleichsposition bringt, einem Federhalter, welcher mit einer Schubbewegung die Haltefeder über das vom Gewichtehalter in der Ausgleichsposition gehaltene Ausgleichsgewicht und das Felgenhorn schiebt, einer federnd ausgebildeten Kompensationseinrichtung, welche unterschiedliche Wegstrecken der Positionierbewegung des Gewichtehalters und der Schubbewegung des Federhalters ausgleicht und einem gemeinsamen Halter für den Federhalter und den Gewichtehalter,
**dadurch gekennzeichnet, dass** für die Positionierbewegung des Gewichtehalters (13) und die Schubbewegung des Federhalters (4) eine gemeinsame Betätigungseinrichtung (14) vorgesehen ist, die Betätigungseinrichtung (14) zwei Steuerflächen (16, 17) aufweist, von denen eine erste Steuerfläche (16) die Betätigungsbewegung auf den Gewichtehalter (13) und die zweite Steuerfläche (17) die Betätigungsbewegung auf den Federhalter (4) übertragen und die Betätigungseinrichtung (14) zur Erzeugung der Betätigungsbewegung um ein Drehlager (8) drehbar ist.

2. Vorrichtung nach Anspruch 1,
**dadurch gekennzeichnet, dass** das Lager (11) des Gewichtehalters (13) als Drehlager ausgebildet ist.

3. Vorrichtung nach Anspruch 1,
**dadurch gekennzeichnet, dass** der Federhalter (4) in einem Lager (5) linear verschiebbar geführt ist.

4. Vorrichtung nach einem der Ansprüche 1 bis 3,
**dadurch gekennzeichnet, dass** der gemeinsame Halter (15) bezüglich einer Radachse (18) des Kraftfahrzeugrades in achsparalleler Richtung (Z) beweglich gelagert ist.

5. Vorrichtung nach einem der Ansprüche 1 bis 4,
**dadurch gekennzeichnet, dass** die beiden Steuerflächen (16, 17) bezüglich des Drehlagers (8) der Betätigungseinrichtung exzentrisch verlaufen.

6. Vorrichtung nach einem der Ansprüche 1 bis 5,
**dadurch gekennzeichnet, dass** am gemeinsamen Halter (15) ferner eine Vorpositioniereinrichtung (19) vorgesehen ist, welche bei der achsparallelen Bewegung des gemeinsamen Halters (15) an das Felgenhorn (2) anlegbar ist.

7. Vorrichtung nach Anspruch 6,
**dadurch gekennzeichnet, dass** die Vorpositioniereinrichtung (19) als Rolle ausgebildet ist.

8. Vorrichtung nach einem der Ansprüche 1 bis 7,
**dadurch gekennzeichnet, dass** in einem konstanten axialen Abstand zur Vorpositioniereinrichtung (19) ein bezüglich der Radachse (18) achsparalleler Reifenabdrücker (20) angeordnet ist.

9. Vorrichtung nach Anspruch 8,
**dadurch gekennzeichnet, dass** der Reifenabdrücker (20) am gemeinsamen Halter (15) in achsparalleler Richtung beweglich gelagert ist.

10. Vorrichtung nach einem der Ansprüche 1 bis 9,
**dadurch gekennzeichnet, dass** zwischen dem Gewichtehalter (13) und der ersten Steuerfläche (16) die Kompensationseinrichtung (12), welche die Bewegung von der ersten Steuerfläche auf den Gewichtehalter (13) überträgt, vorgesehen ist.

## Claims

1. A device for attaching an imbalance compensation weight to a rim flange of an automotive wheel, said compensation weight being attached to the rim flange by means of a separate retaining spring, comprising a weight holder which in a positioning movement brings the compensation weight into the compensation position determined for balancing; a spring holder which, in a translatory motion, passes the retaining spring over the compensation weight held in the compensation position by the weight holder, and the rim flange; an elastic compensation device which compensates for different distances of the positioning motion of the weight holder, and the translatory motion of the spring holder; and a common holder for the spring holder and the weight holder,
**characterized in that** there is provided a common actuating device (14) for the positioning movement of the weight holder (13) and the translatory motion of the spring holder (4), said actuating device (14) having two control surfaces (16, 17) of which a first control surface (16) transmits the actuating motion to the weight holder (13), whereas a second control surface (17) transmits the actuating motion to the spring holder (4), and being rotatable about a pivot bearing (8) in order to produce the actuating motion.

2. A device as set forth in claim 1,
**characterized in that** the bearing (11) of the weight holder (13) is formed as a pivot bearing.

3. A device as set forth in claim 1,
**characterized in that** the spring holder (4) is guided linearly displaceable in a bearing (5).

4. A device as set forth in any of claims 1 to 3,
**characterized in that** said common holder (15) is supported so as to be moveable in a direction (Z) parallel to the axis in relation to a wheel axle (18) of the automotive wheel.

5. A device as set forth in any of claims 1 to 4,
**characterized in that** both control surfaces (16, 17) are arranged eccentrically in relation to the pivot bearing (8) of the actuating device.

6. A device as set forth in any of claims 1 to 5,
**characterized in that** there is further provided a prepositioning device (19) at the common holder (15), which device may be brought into contact with the rim flange (2) when the common holder (15) moves parallel to the axis.

7. A device as set forth in claim 6,
**characterized in that** the prepositioning device (19) is provided in the form of a roller.

8. A device as set forth in any of claims 1 to 7,
**characterized in that** a tyre spacer (20) is provided parallel to the axis of the wheel axle (18) at a constant axial distance from the prepositioning device (19).

9. A device as set forth in claim 8,
**characterized in that** the tyre spacer (20) is supported on the common holder (15) so that it is moveable in a direction parallel to the axle.

10. A device as set forth in any of claims 1 to 9,
**characterized in that** the compensation device (12) transmitting the motion from the first control surface to the weight holder (13) is provided between the weight holder (13) and the first control surface (16).

## Revendications

1. Dispositif pour monter un poids d'équilibrage sur une joue de jante d'une roue de voiture, le poids d'équilibrage étant fixé sur la joue de jante à l'aide d'un ressort de retenue séparé, comportant un porte-poids qui, effectuant un mouvement de positionnement, met le poids d'équilibrage dans la position d'équilibrage prédéterminée ; un porte-ressort, qui, dans un mouvement de translation, place le ressort de retenue sur le poids d'équilibrage tenu dans la position d'équilibrage par le porte-poids et sur la joue de jante ; un dispositif de compensation élastique, qui compense les différentes distances couvertes par le mouvement de positionnement du porte-poids et par le mouvement de translation du porte-ressort ; et un dispositif porteur commun pour le porte-ressort et le porte-poids,
**caractérisé par le fait qu'**un système de commande (14) commun est prévu pour effectuer le mouvement de positionnement du porte-poids (13) et le mouvement de translation du porte-ressort (4), que le système de commande (14) possède deux surfaces de commande (16, 17) dont une première surface de commande (16) transmet le mouvement de commande au porte-poids (13) et la deuxième surface de commande (17) transmet le mouvement de commande au porte-ressort (4) et que le système de commande (14) est monté sur un palier de rotation (8) afin de produire le mouvement de commande.

2. Dispositif selon la revendication 1,
**caractérisé en ce que** le palier (11) du porte-poids (13) est constitué par un palier de rotation.

3. Dispositif selon la revendication 1,
**caractérisé en ce que** le porte-ressort (4) est logé dans un palier (5) de façon à être déplaçable linéairement.

4. Dispositif selon l'une quelconque des revendications 1 à 3,
**caractérisé en ce que** le dispositif porteur commun (15) est logé de façon à être déplaçable dans un sens (Z) parallèle à l'axe par rapport à un axe (18) d'une roue de voiture.

5. Dispositif selon l'une quelconque des revendications 1 à 4,
**caractérisé en ce que** les deux surfaces de commande (16, 17) sont disposées de façon excentrique par rapport au palier de rotation (8) du dispositif de commande.

6. Dispositif selon l'une quelconque des revendications 1 à 5,
**caractérisé en ce qu'**il est prévu en plus au dispositif porteur commun (15) un dispositif de pré-positionnement (19) qui peut être mis contre la joue de la jante (2) lors du mouvement du porteur commun (15) parallèle à l'axe.

7. Dispositif selon la revendication 6,
**caractérisé en ce que** le dispositif de pré-positionnement (19) est prévu sous forme d'une poulie.

8. Dispositif selon l'une quelconque des revendications 1 à 7,
**caractérisé en ce qu'**un écarteur de pneu (20) est disposé à une distance axiale constante par rapport au dispositif de pré-positionnement (19), lequel écarteur est disposé en parallèle à l'axe (18) de la roue.

9. Dispositif selon la revendication 8,
**caractérisé en ce que** l'écarteur de pneu (20) est logé au dispositif porteur (15) commun de façon à être déplaçable dans un sens parallèle à l'axe.

10. Dispositif selon l'une quelconque des revendications 1 à 9,
**caractérisé en ce que** le dispositif de compensation (12) transmettant le mouvement de la première surface de commande au porte-poids (13) est disposé entre le porte-poids (13) et la première surface de commande (16).
